# EUROPEAN PATENT APPLICATION

(11) **EP 2 093 692 A1**
(43) Date of publication of application: **26.08.2009**
(21) Application number: 08101966.3
(22) Date of filing: 25.02.2008
(51) Int. Cl.: G06F 21/24, H04L 12/58, H04L 29/02

(54) **System and method for facilitating secure communication of messages associated with a project**

(71) Applicant: Research In Motion Limited, Waterloo, Ontario N2L 3W8 (CA)
(72) Inventor: May, Darrell Reginald, Waterloo Ontario N2V 2K6 (CA); Adams, Neil, Waterloo Ontario N2K 4E4 (CA); Brown, Michael S, Kitchener Ontario N2K 4J4 (CA)
(74) Representative: Rickard, David John

(57) **Abstract**

Embodiments of a system and method for facilitating secure communication of messages associated with a project between computing devices, including for example, a first mobile device and at least a second mobile device are disclosed. One or more intermediate computing devices coupled to the first and second mobile devices are configured to receive and verify registration requests received from the mobile devices, and to assign addresses associated with mobile device users to a distribution list associated with the project. When a message that has been sent from a first user and addressed to at least a second user is received at the one or more intermediate computing devices, a determination is made as to whether the message is associated with the project, and if so, in one example embodiment, the message is transmitted to the second user only if both the address associated with the first user and the address associated with the second user have been assigned to the distribution list.

## Description

Embodiments described herein relate generally to the communication of messages (e.g. e-mail messages) between users of computing devices, including for example, mobile devices.

Certain organizations may require their members (e.g. employees) to participate in projects that are of a highly sensitive nature. An employee will typically engage in communications (e.g. e-mail communications) with other employees in his or her organization, and potentially with other parties outside of his or her organization, with regards to a sensitive project. Each employee or outside party may wish to receive messages associated with the project on his or her mobile device.

Due to the sensitive nature of the project, it is often desirable to ensure that additional safeguards are implemented so that unauthorized parties will not be able to easily intercept and obtain sensitive information that might be contained in messages communicated between project participants.

### General

In one broad aspect, there may be provided a method of facilitating secure communication of messages associated with a project between a first computing device and at least a second computing device, wherein the method may be performed at one or more intermediate third computing devices, the method may comprise: performing at least one user registration, each of the at least one user registration being performed upon receiving a registration request, wherein the project is identified in the registration request; receiving a message comprising a first user address associated with one of the first and second computing devices, wherein the message further comprises a second user address associated with one other of the first and second computing devices; determining if the message is associated with the project; and transmitting the message to the other of the first and second computing devices if the message is determined to be associated with the project and if both the first user address associated with the one of the first and second computing devices and the second user address associated with the other of the first and second computing devices are assigned to a distribution list, the distribution list being associated with the project and managed by the one or more intermediate third computing devices.

### Brief Description of the Drawings

For a better understanding of embodiments of the systems and methods described herein, and to show more clearly how they may be carried into effect, reference will be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration;
FIG. 5 is a block diagram illustrating components of an intermediate computing device in one example configuration;
FIGS. 6A and 6B each illustrate, by way of example, two mobile devices coupled to at least one intermediate computing device configured in accordance with an example embodiment; and
FIG. 7 is a flowchart illustrating steps in a method of facilitating secure communication of messages associated with a project, in accordance with a number of example embodiments.

### Description of Preferred Embodiments

Messages associated with a sensitive project that are to be communicated between users of mobile devices may be encrypted. In known systems, however, the same encryption keys will typically be used to secure messages between given mobile device users, regardless of whether a particular message is associated with the sensitive project or not. Additional security may be desirable for messages associated with the sensitive project.

In other known systems, a segregation of mobile device communications associated with the project may be implemented in an effort to achieve greater security. For example, separate messaging (e.g. e-mail) accounts may be set up for each project participant, or alternatively, each project participant may be provided with a separate mobile device. The separate accounts or devices can be used strictly for communications associated with the project, and different encryption keys may be associated with these separate accounts or devices. However, requiring that a particular user operate multiple mobile devices or set up and manage multiple accounts in order that he or she may engage in communications associated with the project may be inconvenient for the user and difficult to enforce. Enabling the user to engage in such communications in this manner may be especially cumbersome if the user is to participate in multiple sensitive projects.

In one broad aspect, there is provided a method of facilitating secure communication of messages associated with a project between a first computing device and at least a second computing device, wherein the method is performed at one or more intermediate third computing devices, the method comprising: performing at least one user registration, each of the at least one user registration being performed upon receiving a registration request, wherein the project is identified in the registration request; receiving a message comprising a first user address associated with one of the first and second computing devices, wherein the message further comprises a second user address associated with one other of the first and second computing devices; determining if the message is associated with the project; and transmitting the message to the other of the first and second computing devices if the message is determined to be associated with the project and if both the first user address associated with the one of the first and second computing devices and the second user address associated with the other of the first and second computing devices are assigned to a distribution list, the distribution list being associated with the project and managed by the one or more intermediate third computing devices.

In another broad aspect, there is provided a method of facilitating secure communication of messages associated with a project between a first computing device and at least a second computing device, wherein the method is performed at one or more intermediate third computing devices, the method comprising: receiving a message comprising a first user address associated with one of the first and second computing devices, wherein the message further comprises a second user address associated with one other of the first and second computing devices; determining if the message is associated with the project; encrypting the message prior to transmitting the message to the second user address if the message is determined to be associated with the project, wherein the message associated with the project is encrypted with an encryption key, wherein the encryption key is associated with the project; and transmitting the message to the other of the first and second computing devices if the message is determined to be associated with the project and if both the first user address associated with the one of the first and second computing devices and the second user address associated with the other of the first and second computing devices are assigned to a distribution list, the distribution list being associated with the project and managed by the one or more intermediate third computing devices. In another broad aspect, there is provided a system for facilitating secure communication of messages associated with a project between a first computing device and at least a second computing device, the system comprising: the first and second computing device; and one or more intermediate third computing devices coupled to the first and second computing devices; wherein in operation, messages communicated between the first and second computing devices are routable through the one or more intermediate third computing devices; and wherein the one or more intermediate third computing devices are configured to perform the steps of the method. In another broad aspect, there is provided an intermediate computing device for securely transmitting messages associated with a project between a first computing device and at least a second computing device, wherein messages communicated between the first and second computing devices are routable through the intermediate computing device, wherein the intermediate computing device is configured to perform the steps of the method. In another broad aspect, there is provided a computer-readable medium for facilitating secure communication of messages associated with a project between a first mobile device and at least a second mobile device comprising instructions executable on a processor of one or more intermediate third computing devices, which when executed, causes the processor to perform the steps of the method. In one example embodiment, the encryption key is controlled by the one or more intermediate third computing devices. In one example embodiment, the first computing device comprises a first mobile device. In one example embodiment, the second computing device comprises a second mobile device.

These and other aspects and features of various embodiments will be described in greater detail below.

Embodiments described herein make reference to a mobile device. A mobile device generally refers to a two-way communication device with advanced data communication capabilities having the capability to communicate with other computer systems. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

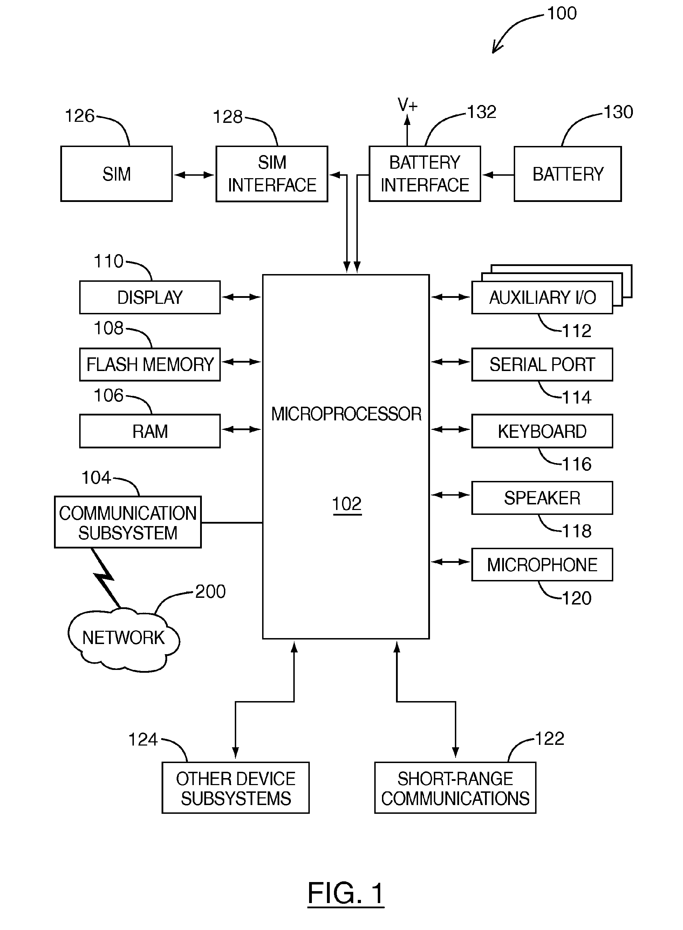

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications subsystem 122 and other device subsystems 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 provides for a Subscriber Identity Module ("SIM") card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services may include without limitation: web browsing and messaging such as e-mail, voice mail, Short Message Service (SMS), and Multimedia Messaging Services (MMS). More advanced services may include without limitation: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 may be a battery-powered device and may include a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide the power to mobile device 100. In some embodiments, mobile device 100 may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication include standards developed by the Infrared Data Association (IrDA), Bluetooth^{®}, and the 802.11 family of standards developed by IEEE.

In use, a received signal such as a text message, an e-mail message, or web page download is processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad. A composed item may be transmitted over network 200 through communication subsystem 104.

For voice communications, the overall operation of mobile device 100 is substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

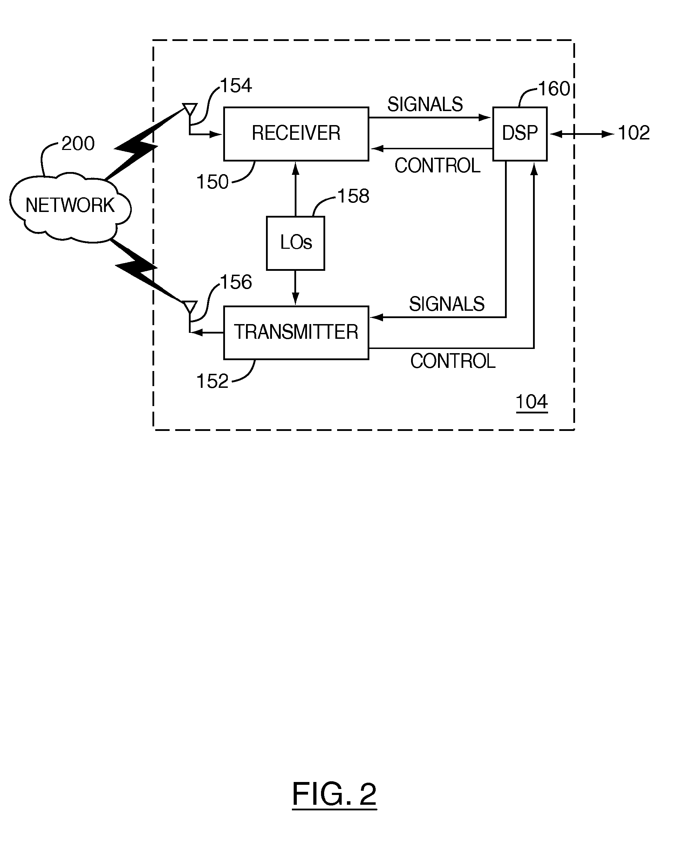

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate; thus, it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource, typically due to limits in overall bandwidth and limited battery power of mobile device 100.

When mobile device 100 is fully operational, transmitter 152 may be typically keyed or turned on only when it is sending to network 200 and may otherwise be turned off to conserve resources. Similarly, receiver 150 may be periodically turned off to conserve power until it is needed to receive signals or information (if at all) during designated time periods.

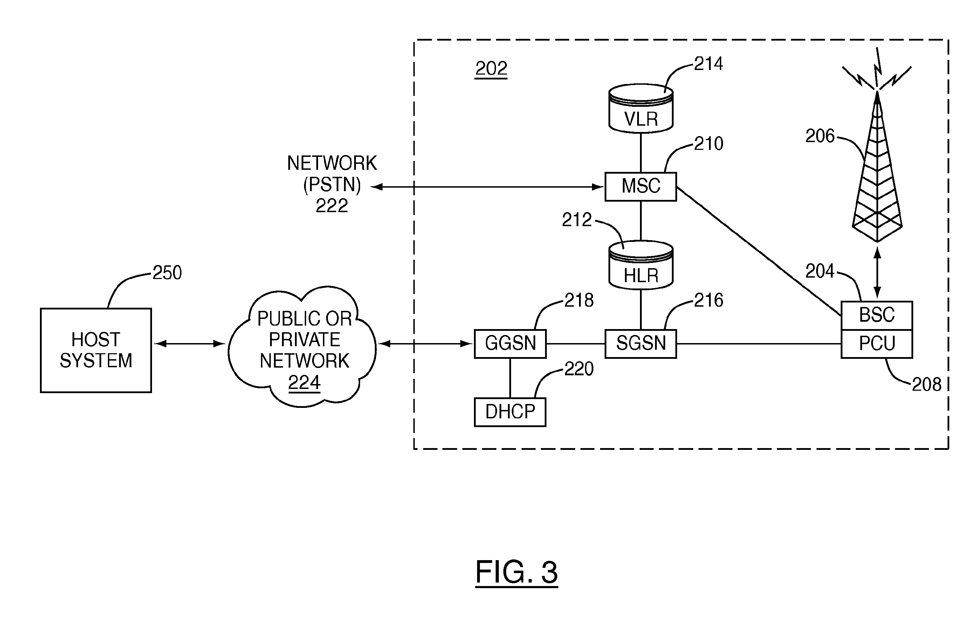

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 performs a "GPRS Attach" to acquire an IP address and to access data services. This normally is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

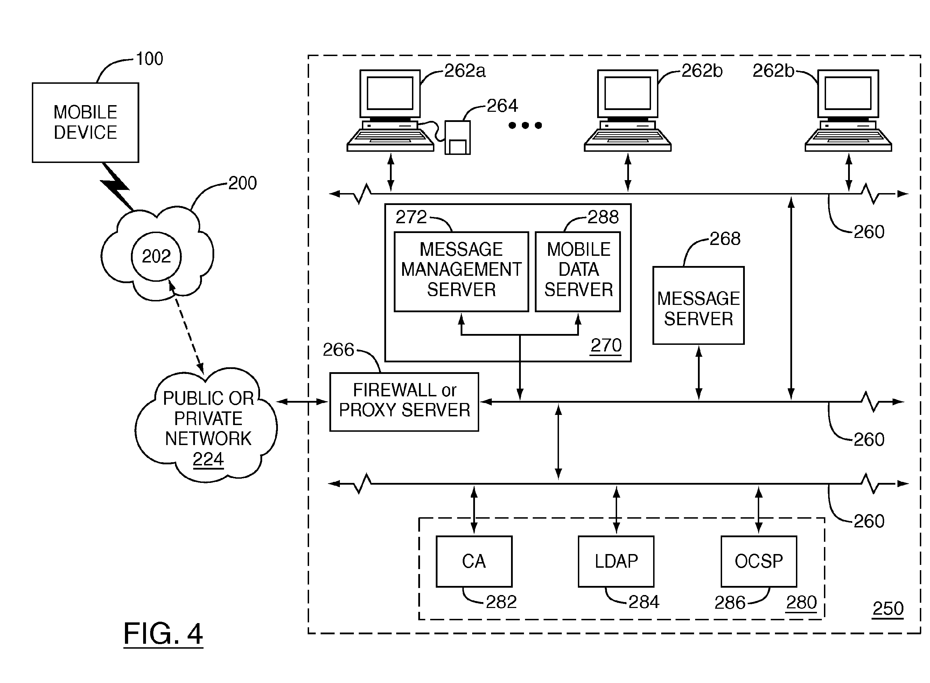

Referring now to FIG. 4, a block diagram illustrating components of a host system in one example configuration is shown. Host system 250 will typically be a corporate office or other local area network (LAN), but may instead be a home office computer or some other private system, for example, in variant implementations. In this example shown in FIG. 4, host system 250 is depicted as a LAN of an organization to which a user of mobile device 100 belongs.

LAN 250 comprises a number of network components connected to each other by LAN connections 260. For instance, a user's desktop computing device ("desktop computer") 262a with an accompanying cradle 264 for the user's mobile device 100 is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include S/MIME certificates or PGP keys used in the exchange of messages.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. The concept of a wireless VPN router is new in the wireless industry and implies that a VPN connection can be established directly through a specific wireless network to mobile device 100. The possibility of using a wireless VPN router has only recently been available and could be used when the new Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection may include, for example, a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages may then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

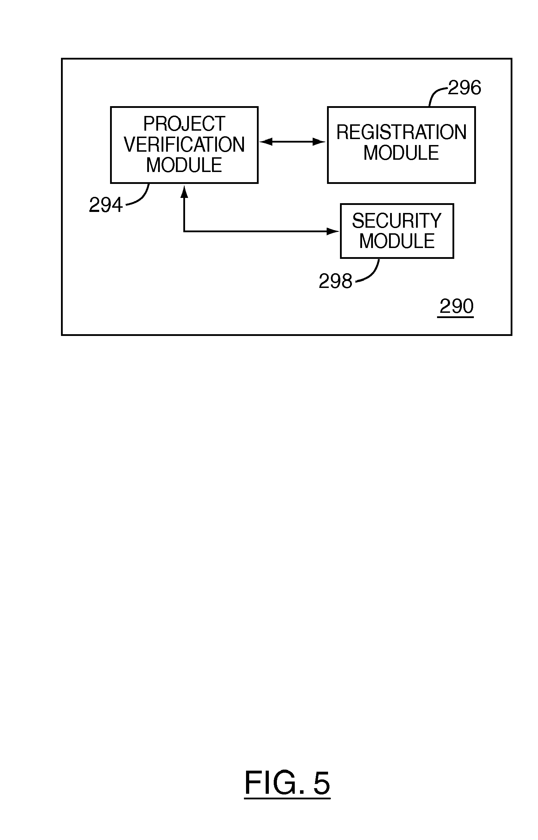

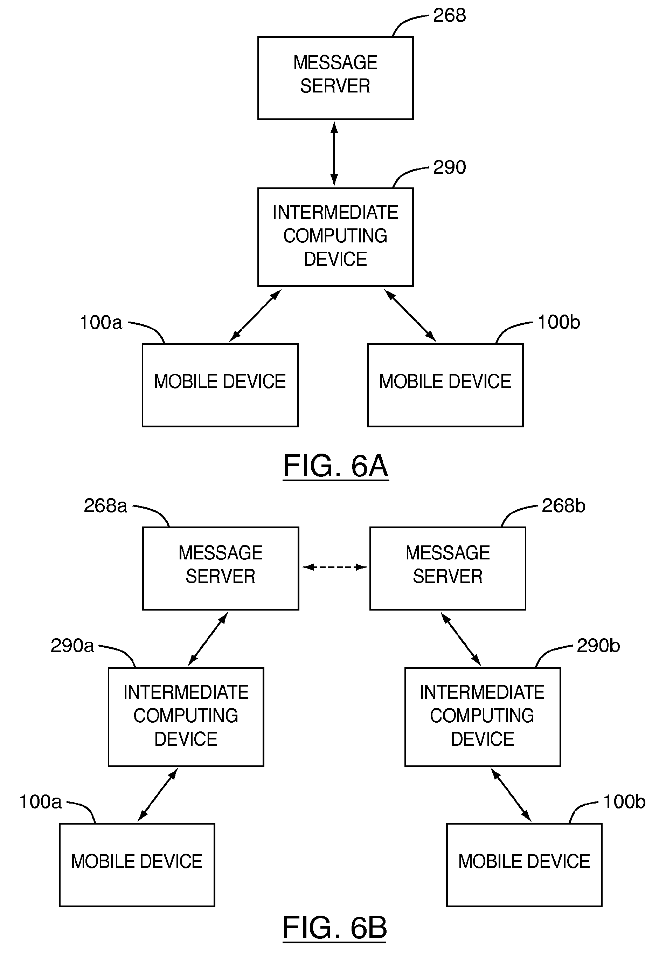

To facilitate the wireless communication of messages and message-related data between mobile device 100 and components of LAN 250, a number of wireless communications support components 270 may be provided. In this example implementation, wireless communications support components 270 comprise a message management server 272, for example. A message management server 272 is one example of an intermediate computing device 290 for coupling to a mobile device 100, as shown in FIGS. 5, 6A and 6B and described in further detail in this specification. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices need to be supported.

Certificates may be used in the processing of encoded messages, such as e-mail messages, that are encrypted and/or signed, in accordance with certain secure messaging protocols. While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and provides data integrity and privacy from the time an originator of a message sends a message until it is decoded and read by the message recipient. Other standards and protocols may be employed to facilitate secure message communication, such as Pretty Good Privacy™ (PGP) and variants of PGP such as OpenPGP, for example. It will be understood that where reference is generally made to "PGP" herein, the term is intended to encompass any of a number of variant implementations based on the more general PGP scheme.

Secure messaging protocols such as S/MIME and PGP-based protocols rely on public and private encryption keys to provide confidentiality and integrity. Data encoded using a private key of a private key/public key pair can only be decoded using the corresponding public key of the pair, and data encoded using a public key of a private key/public key pair can only be decoded using the corresponding private key of the pair. It is intended that private key information never be made public, whereas public key information is shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as RSA), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate successful decryption of the message, and in this way, the confidentiality of messages can be maintained.

As a further example, a sender may sign a message using a digital signature. A digital signature generally comprises a digest of the message (e.g. a hash of the message) encoded using the sender's private key, which can then be appended to the outgoing message. To verify the digital signature of the message when received, the recipient uses the same technique as the sender (e.g. using the same standard hash algorithm) to obtain a digest of the received message. The recipient also uses the sender's public key to decode the digital signature, in order to obtain what should be a matching digest for the received message. If the digests of the received message do not match, this suggests that either the message content was changed during transport and/or the message did not originate from the sender whose public key was used for verification. Digital signature algorithms are designed in such a way that only someone with knowledge of the sender's private key should be able to encode a signature that the recipient will decode correctly using the sender's public key. Therefore, by verifying a digital signature in this way, authentication of the sender and message integrity can be maintained.

An encoded message may be encrypted, signed, or both encrypted and signed. "Signed and/or encrypted" means signed or encrypted or both. In S/MIME, the authenticity of public keys used in these operations is validated using certificates. A certificate is a digital document issued by a certificate authority (CA). Certificates may be used to authenticate the association between users and their public keys, and essentially, provides a level of trust in the authenticity of the users' public keys. Certificates contain information about the certificate holder, with certificate contents typically formatted in accordance with an accepted standard (e.g. X.509). The certificates are typically digitally signed by the certificate authority.

In PGP-based systems, a PGP key is used, which is like an S/MIME certificate in that it contains public information including a public key and information on the key holder or owner. Unlike S/MIME certificates, however, PGP keys are not generally issued by a certificate authority, and the level of trust in the authenticity of a PGP key typically requires verifying that a trusted individual has vouched for the authenticity of a given PGP key.

For the purposes of the specification and in the claims, the term "certificate" is used generally to describe a construct used to provide public keys for encoding and decoding messages and possibly information on the key holder, and may be deemed to include what is generally known as a "PGP key" and other similar constructs.

Standard e-mail security protocols typically facilitate secure message transmission between non-mobile computing devices (e.g. computers 262a, 262b of FIG. 4; remote desktop devices). In order that signed messages received from senders may be read from mobile device 100 and that encrypted messages be sent from mobile device 100, mobile device 100 is adapted to store public keys (e.g. in S/MIME certificates, PGP keys) of other individuals. Keys stored on a user's computer 262a may be downloaded from computer 262a to mobile device 100 through cradle 264, for example.

Mobile device 100 may also be adapted to store the private key of the public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key is exchanged between the computer 262a and mobile device 100 so that the user may share one identity and one method for accessing messages.

User computers 262a, 262b can obtain S/MIME certificates and PGP keys from a number of sources, for storage on computers 262a, 262b and/or mobile devices (e.g. mobile device 100). These certificate sources may be private (e.g. dedicated for use within an organization) or public, may reside locally or remotely, and may be accessible from within an organization's private network or through the Internet, for example. In the example shown in FIG. 4, multiple public key infrastructure (PKI) servers 280 associated with the organization reside on LAN 250. PKI servers 280 include a CA server 282 that may be used for issuing S/MIME certificates, a Lightweight Directory Access Protocol (LDAP) server 284 that may be used to search for and download S/MIME certificates and/or PGP keys (e.g. for individuals within the organization), and an Online Certificate Status Protocol (OCSP) server 286 that may be used to verify the revocation status of S/MIME certificates, for example.

Certificates and/or PGP keys may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates and PGP keys through a mobile data server 288. Similarly, mobile data server 288 may be adapted to allow mobile device 100 to directly query OCSP server 286 to verify the revocation status of S/MIME certificates.

In variant implementations, only selected PKI servers 280 may be made accessible to mobile devices (e.g. allowing certificates to be downloaded only from a user's computer 262a, 262b, while allowing the revocation status of certificates to be checked from mobile device 100).

In variant implementations, certain PKI servers 280 may be made accessible only to mobile devices registered to particular users, as specified by an IT administrator, possibly in accordance with an IT policy, for example.

Other sources of S/MIME certificates and PGP keys [not shown] may include a Windows certificate or key store, another secure certificate or key store on or outside LAN 250, and smart cards, for example.

Embodiments described herein relate generally to a system and method for increasing the security and privacy of sensitive communications sent between computing devices, including for example, mobile devices. Embodiments will be described herein, by way of example, with reference to mobile devices. Messages to be communicated between one mobile device and other mobile devices may be associated with a project (e.g. a project designated as sensitive or private), such that the messages will be subject to special processing as described below with reference to example embodiments.

Referring now to FIG. 5 a block diagram illustrating components of an intermediate computing device 290 in one example configuration is shown. In accordance with some exemplary embodiments the intermediate computing device 290 comprises one or more application modules for execution on the at least one intermediate computing device 290. Examples of application modules may include a project verification module 294, a registration module 296, and a security module 298, as will be explained herein.

In accordance with at least one example embodiment, at least one intermediate computing device 290 (e.g. message management server 272 of FIG. 4), coupled between a first mobile device and at least a second mobile device, processes messages (e.g. e-mail) composed at the first mobile device by a user. The message composed by a user at the first mobile device will comprise a user address associated with the user. For each message received by an intermediate computing device 290 from the first mobile device, a project verification module 294 of intermediate computing device 290 may be configured to determine whether the message is associated with the project. In one embodiment, the project verification module 294 of the intermediate computing device 290 determines whether the message is associated with the project by determining if the message comprises an indication that the user of the first mobile device (i.e. the device from which the message is sent) assigned a category identifying the project when composing the message. In another embodiment, the project verification module 294 of intermediate computing device 290 determines whether the message is associated with the project by determining if the message content (e.g. the subject line and/or body of the message) comprises one or more keywords that have been predefined as being associated with the project. In another embodiment, the project verification module 294 of intermediate computing device 290 determines whether the message is associated with the project by determining whether the addresses of the message match the addresses on a distribution list associated with the project. In another embodiment, the project verification module 294 of intermediate computing device 290 determines whether the message is associated with the project by determining if the message is a reply to an original message or is a forwarded message that comprises an original message, and then determines whether the original message is associated with the project in accordance with one of the other embodiments described herein. Further details with respect to these and other embodiments are described herein.

Once the project verification module 294 of intermediate computing device 290 recognizes the message as being associated with the project, the list of intended recipients is checked. The project verification module 294 determines if each intended recipient is an individual authorized to receive messages associated with the project. In at least one embodiment, intermediate computing device 290 manages a distribution list of user addresses to which messages associated with the project can be sent. If the project verification module 294 determines that a particular intended recipient is not authorized to receive the message, the project verification module 294 of intermediate computing device 290 may prevent the message from being forwarded to a mail server (e.g. an Exchange server) and subsequently sent to those unauthorized recipients. In a variant embodiment, a message may be sent back to the sender of the message indicating that one or more of the recipients are not part of the project. In a variant embodiment, a message may be sent to the recipient indicating that a message has been sent to the recipient but that the recipient is not authorized to read it, and that in order to receive further messages, the recipient should contact an administrator associated with the project. The administrator may be the individual who initially defines the project.

As an additional security measure, in at least one embodiment, intermediate computing device 290 comprises a security module 298 configured to encrypt some or all of the content of the message associated with the project with a project-specific, encryption key. This encryption is independent of and may be applied over and above any encryption or other security mechanism that might otherwise be applied to secure data communications (e.g. existing encryption that is applied to the data communicated wirelessly between an intermediate computing device 290 and a mobile device). In a variant embodiment, the security module 298 has access to a public key infrastructure storing public encryption keys for each user of the project, and uses those keys to encrypt the message, rather than the one project-specific encryption key.

In some implementations, all of the mobile devices that are to be operated by project participants will be coupled to the same intermediate computing device 290. In other implementations, each mobile device to be operated by a project participant (e.g. who may or may not belong to the same organization as other project participants) will be coupled to one of multiple intermediate computing devices 290.

Intermediate computing device 290 may also comprise a registration module 296. The functionality of registration module 296 in at least one embodiment will be described in further detail later in the present specification.

It will be understood by persons skilled in the art that intermediate computing device 290 may also comprise other components not explicitly shown in FIG. 5 for simplicity.

FIGS. 6A and 6B each illustrate, by way of example, two mobile devices coupled to at least one intermediate computing device 290 configured in accordance with at least one example embodiment. Persons of ordinary skill in the art will understand that certain elements (e.g. internal and external network components) have been omitted from these figures for simplicity.

In FIG. 6A, in respect of at least one example embodiment, a first mobile device 100a and a second mobile device 100b (e.g. each may have components of mobile device 100 of FIG. 1) are shown coupled to the same intermediate computing device 290 (e.g. message management server 272). Messages sent from and received by mobile devices 100a, 100b may be routed via the intermediate computing device 290 to and/or from a local message server 268 in known manner.

In FIG. 6B, in respect of at least one other example embodiment, a first mobile device 100a is shown coupled to a first intermediate computing device 290a (e.g. message management server 272). Messages sent from and received by mobile device 100a may be routed via intermediate computing device 290a to and from a local message server 268a respectively in known manner. Similarly, a second mobile device 100b is shown coupled to a second intermediate computing device 290b (e.g. a different message management server). Messages sent from and received by mobile device 100b may be routed via the second intermediate computing device 290b to and from a local message server 268b respectively in known manner. Intermediate computing devices 290a, 290b and the respective message servers 268a, 268b may reside on separate LANs, possibly of the same organization or of different organizations. Messages communicated between mobile devices 100a, 100b will generally be routed between message servers 268a, 268b over a public or private network (e.g. the Internet or other shared network infrastructure 224 of FIG. 4).

Where a message is to be sent from a first mobile device 100a to a second mobile device 100b (or vice-versa) and processed in accordance with an embodiment of a method described herein, and where the message is to be routed via multiple intermediate computing devices 290 (e.g. intermediate computing devices 290a, 290b as shown by way of example in FIG. 6B), the determination of whether a given message is to be forwarded to a recipient may be made at one intermediate computing device 290, or repeated at more than one intermediate computing device 290.

In one embodiment, each intermediate computing device 290 manages a distribution list of user addresses to which messages associated with the project can be sent. In another embodiment, the distribution lists of multiple intermediate computing devices 290 can be synchronized. In another embodiment, a shared distribution list can be managed, accessible by each of multiple intermediate computing devices.

It will be understood by persons skilled in the art that data for a distribution list managed by an intermediate computing device 290 may reside on that intermediate computing device 290, or it may reside on a different intermediate computing device 290, or on some other computing device.

In accordance with at least one example embodiment, the at least one intermediate computing device 290 further comprises a registration module 296 that is configured to manage registration requests received by the intermediate computing device 290 from mobile device users, without requiring manual intervention. Users who submit a registration request that is successfully verified will have their address assigned to the distribution list associated with the project, thereby enabling those users to send and receive messages associated with the project. In one embodiment, where a password or shared secret has been established in association with the project, the correct password or shared secret must be submitted with the registration request in order for that request to be successfully verified. In a variant embodiment, the registration request may need to be authorized by the project owner/administrator. This may be the individual who initially defines the project. In some cases a manual authorization may be required.

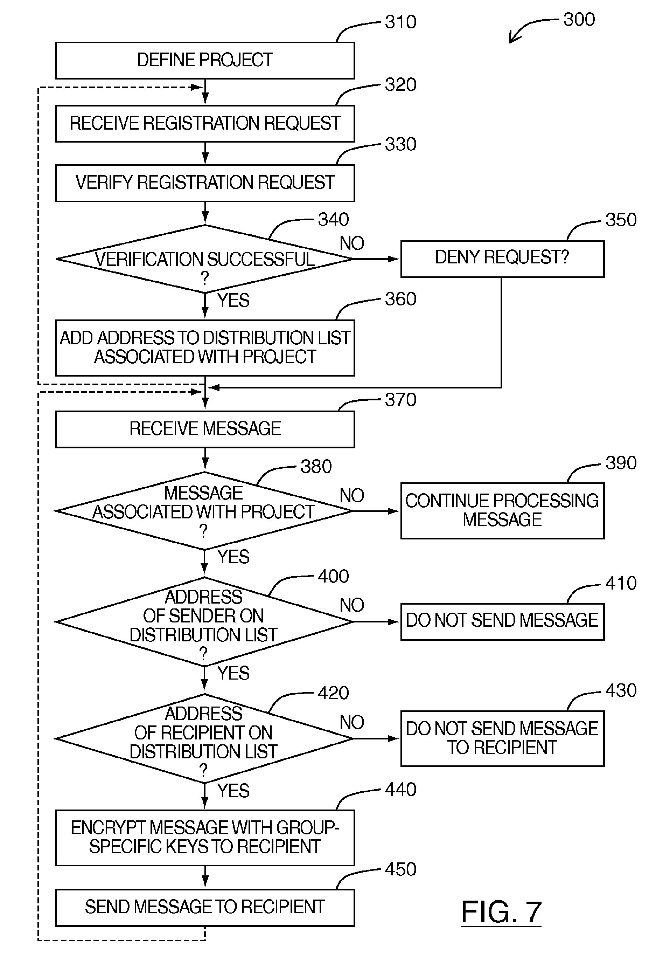

Further features of the above-mentioned example embodiments and features of other example embodiments will be apparent from the description that follows with reference to FIG. 7.

Referring now to FIG. 7, a flowchart illustrating steps in a method of facilitating secure communication of messages associated with a project in accordance with a number of example embodiments, is shown generally as 300. Additional details of some of the features described below in respect of the steps of method 300 may be described earlier in the present specification.

In at least one embodiment, the steps of method 300 may be performed by one or more application modules executing and residing at one or more intermediate computing devices 290 (e.g. message management server 272) or intermediate computing devices 290a, 290b coupled to a first mobile device (100, 100a) and at least one second mobile device (100, 100b). Examples of application modules may include, without limitation: project verification module 294, registration module 296 and security module 298 (FIG. 5). Persons skilled in the art will understand that the example application modules 294, 296, and 298 as described herein are provided for illustration purposes only, and may differ in variant implementations. Some of all of the functionality of one or more of these example modules may be provided by fewer modules or distributed over a greater number of modules, for example. Messages communicated between the first and second mobile devices are routable through the at least one intermediate computing device 290, 290a, 290b. The application modules need not be provided by a stand-alone application, and the functionality described herein may be implemented in one or more application modules 294, 296, 298 for execution on the at least one intermediate computing device 290, 290a, 290b. In the present description, the at least one intermediate computing device 290, 290a, 290b may be referred to generally as the at least one intermediate computing device 290.

At step 310, a project for which an associated distribution list is to be managed by the at least one intermediate computing device 290 is defined. The at least one intermediate computing device 290 is configured to accept project creation requests. The project creation request can be submitted by an administrator or by a mobile device user. A project administrator may be associated with the project at this step.

The at least one intermediate computing device 290 identifies the project to be defined upon receipt of a project creation request and initializes a distribution list for that project. The distribution list is managed by the at least one intermediate computing device 290 and is used to keep track of who (e.g. which mobile device users) is permitted to send and/or receive communications associated with the project.

In one embodiment, a distribution list may be managed centrally for multiple intermediate computing devices 290. Alternatively, a separate distribution list may be managed separately at each of the intermediate computing devices 290, which may or may not be synchronized between the intermediate computing devices 290.

In some embodiments, the distribution list may contain additional information that is used to control the communication of messages associated with the project. For example, information that identifies different levels of privileges for different mobile device users may be stored. For instance, some mobile device users may be permitted to only send messages, while some may be permitted to only receive messages, while still others may be permitted to both send and receive messages associated with the project.

The distribution list can be initialized with the user addresses of one or more mobile device users that are permitted to send and/or receive messages associated with the project. In some embodiments, the distribution list may be initialized with a single user address. For example, if a mobile device user submits a project creation request, the distribution request may be initialized with that user's address. Alternatively, the person submitting the project creation request, whether it is a mobile device user or an administrator, may have the option of identifying one or more user addresses to be assigned to the distribution list when it is initialized. In another embodiment, the distribution list may be initialized, but not initially with any user addresses.

An address (e.g. an e-mail address) of a user of a mobile device, whether the user is sending or receiving a message, is also referred to generally herein in the specification and in the claims as a user address that is associated with that user's particular mobile device. Persons skilled in the art will understand that an address may be associated with an account, and that a user may employ the same address for sending and receiving messages from his or her mobile device as well as from other computing devices.

In one embodiment, one or more keywords for searching may also be identified when defining a project. The keywords can be individual words or phrases that are likely to be used in association with a particular project, such as for example, but not limited to, the project name. The project verification module 294 of the at least one intermediate computing device 290 may be configured to search the content of messages that are sent by mobile device users for these keywords, to determine whether that message is associated with a particular project. For example, the keywords for a particular project may comprise the phrase "PROJECT ALPHA". The project verification module 294 may be programmed to search for any messages that contain this phrase in the message body. If an instance of this phrase is located, then the project verification module 294 will assume that the message is associated with the particular project. In some implementations, it may be desirable to ensure that some pre-defined number of instances (i.e. more than one) of the keyword(s) to be searched for be identified in a message, before the determination that the message is associated with the particular project is made. This may prevent the message being accidentally associated with the wrong project. In another implementation, the keyword(s) may be only searched for in a particular part of a message, such as the subject line, the first line of the message, the last line of the message, or any line of text where the first word is "Project:", for example. In another implementation, certain logic to be applied in the searching of messages may be implemented, in the form of rules, for example. For example, a message may be searched for using queries employing Boolean operations, such as for example: "ALPHA" and ("SECURITY" or "TRANSPORT"). In another implementation, each keyword of a plurality of keywords may be associated with an individual score. Each instance of a keyword found in the message results in the associated score being added to a cumulative total (e.g. once no matter how many times the appears in the message, or multiple times if the keyword appears more than once in the message), and if the cumulative total exceeds a pre-defined score, then the message is deemed to be associated with the particular project for which the plurality of keywords are defined. A combination of features of one or more of the above-mentioned implementations may be employed. The keywords and search parameters may be defined by a user (e.g. the user defining the project) or by an administrator (e.g. via IT policy). Other implementations are possible in variant embodiments.

For example, the score may be computed (e.g. based on the number of instances of keywords detected) for each potential project that the message may be associated with. In the event of a conflict, the project having a higher computed score, for example, may be selected. Alternatively, a message may be sent back to the sender where there is a conflict, requesting the sender to resolve the conflict.

If the message is found to be associated with a particular project, the message may then be appropriately processed. This will be discussed in greater detail below with reference to step 380.

In one embodiment, a category indicator may be identified when defining a project. When a user composes a message, the user can identify the message as relating to the category (e.g. by setting a corresponding flag or custom setting). A default project may be presented to the user. For example, the project last selected when sending a message to certain recipients can be suggested by a user's messaging application. In this way, the next time a message to the same recipient(s) is composed, a project may be automatically provided for selection by default. A default general category may be identified (e.g. "no project") when a message is to be sent to one or more new recipients.

For example, different project names may be associated with different projects. Each project name may be selected so that they are easily identifiable by users (e.g. "Project Confidential", "Project Alpha"). The project name may be provided as input when a particular project is defined at step 310. In one embodiment, the user interface used when the user composes a message may provide, for example, a drop-down menu control providing selectable options for categories, which lists the various projects that have been defined by project name. The user may then select a particular project name from the drop-down menu in a user interface at the message sender's computing device to identify the message as relating to that project. A corresponding category indicator (e.g. a name, code, or other identifier) may be appended to the message to indicate that the message relates to that project. The message will then include this category indicator (e.g. in a message header), which is used to indicate to the project verification module 294 of at least one intermediate computing device 290 that the message is associated with the particular project. The intermediate computing device 290 may maintain a look-up table or other data structure that stores data to indicate to the project verification module 294 which category indicator corresponds to which project, and accordingly, to which distribution list. The at least one intermediate computing device 290 may then appropriately process the message. This will be discussed in greater detail below in relation to step 380.

In a variant embodiment, the project verification module 294 may compare the e-mail addresses identified in a message to the addresses identified in each of a plurality of distribution lists. For example, if the addresses in a particular distribution list for a particular project exactly match the addresses to which the message is to be sent, it may be assumed that the message is associated with the particular project. Further input may be required from a user in the event that more than one distribution list (and therefore more than one project) can be matched to a message in this manner.

In another embodiment, the project verification module 294 of intermediate computing device 290 determines whether a message is associated with a particular project by determining if the message is a reply to an original message or is a forwarded message that comprises an original message, and then determines whether the original message is associated with the project in accordance with one of the other embodiments described herein (e.g. if the original message has been identified as being associated with a project using a category indicator). For example, this may be implemented in a system where reply and forward messages sent to a mobile device do not include the body of the original message, but a pointer to the body of the original message instead, on a server (e.g. a message management server). If the project verification module 294 is able to communicate with a message management server or if it is implemented in the message management server, it can easily determine the project associated with the original message since it still has access to it. The project verification module 294 may store the original message. The project verification module 294 may access the original message from the user's "mailbox" on a message server.

In a variant embodiment, where a message is encrypted with a project-specific encryption key, a message may be determined to be associated with a particular project if the message has been encrypted with the associated project-specific encryption key. For example, if a message is encrypted with the "Project Alpha" key, then there is a reasonably high likelihood that the message is associated with "Project Alpha". Other methods of verifying that a message is associated with a particular project may also be used in conjunction with the checking of the project-specific encryption key, in case the message was incorrectly encrypted with the wrong key and if the sender is a member of more than one project.

In variant embodiments, an alternative mechanism may be employed to classify communications, such that a given message may be associated with one of a plurality of different projects in accordance with the classification mechanism employed.

In one embodiment, a password, passcode or other shared secret may also be identified when defining a project. The password, passcode or shared secret can be used to verify registration requests received from other parties that are subsequently received by the at least one intermediate computing device 290. Specifically, after a project has been defined and the distribution list is initialized, user addresses of additional mobile device users may be assigned to the distribution list by submitting a registration request to, for example, the registration module 296 of the intermediate computing device 290. The password, passcode or shared secret is used so that the at least one intermediate computing device 290 may discriminate between legitimate registration requests and illegitimate requests, thereby preventing any unauthorized persons from being registered. The verification of the registration requests will be discussed in greater detail in relation to step 330.

Steps 320 to 360 are registration steps, and can be repeated to register multiple users. In accordance with some exemplary embodiments, the registration module 296 of the intermediate computing device 290 is configured to implement some or all of steps 320 to 360. User addresses may be assigned to the distribution list associated with the defined project, in response to registration requests. Although not shown, other types of requests may be submitted to the at least one intermediate computing device 290, for example, to add user addresses to and/or remove user addresses from an initialized distribution list.

In one embodiment, users can be assigned a status or privilege level, either when they register or at a later time. The status may determine such things as the user's ability to modify the distribution list. For example, a particular user may be permitted to (i) add or remove only him or herself, (ii) add others but not remove others, (iii) remove others but not add others, or (iv) both add and remove others. Alternatively, "special users" may be defined that have the ability to manage the list in ways that are not available to other users. For example, the special users (e.g. administrators) may have the ability to remove people from the distribution list while regular users may not have this ability.

At step 320, a registration request is received from a mobile device user at the registration module 296 of the at least one intermediate computing device 290. For example, the registration request may be sent via e-mail. The request may be signed, encrypted and/or sent over a secure channel for security. The registration request may alternatively be submitted through a different channel (e.g. via a web site using a HTTPS connection), in variant embodiments. The registration request identifies a particular project and thereby identifies a particular distribution list. The registration request also typically includes personal information of the user that is to be registered. For example, the request may include the name and address of the user so that it may be added as other information to the distribution list after the request has been verified.

At step 330, registration module 296 of an intermediate computing device 290 verifies the registration request that was received at step 320. The verification process can involve such things as checking that the password, passcode or shared secret submitted with the registration request matches the respective stored password, passcode or shared secret that has been defined for the project.

The intermediate computing device 290 may also perform other checks. For example, the intermediate computing device 290 may verify that the person submitting the request is a user of a mobile device for which a user address associated with that mobile device has been assigned to the distribution list. This may be done for example, by checking that the user's e-mail address is valid that it matches the e-mail address assigned to the distribution list or, that some other personal information of the user matches what is recorded on the distribution list. Furthermore, the status of the user submitting the registration request may also be verified in order to ensure that the user's status allows the user to add people to the distribution list.

At step 340, the registration module 296 of the at least one intermediate computing device 290 determines whether the registration request was successfully verified at step 330. If the registration request was not successfully verified, then the registration request is denied as shown at step 350. On the other hand, if the registration request was successfully verified, then step 360 is executed.

At step 360, the address of the user is assigned to the distribution list associated with the project. Confirmation may be sent to various users that a person has been registered. For example, a confirmation message may be sent to the user that has been added, as well as to the user who initially defined the project and/or to some other party. Alternatively, such confirmation may be sent to everyone on the distribution list or it may be sent to only those people on the distribution list that are associated with at least a particular status level, such as for example, but not limited to, those who are permitted to assign addresses of new users to the distribution list.

As mentioned above, registration steps 320 to 360 can be repeated in order to register multiple users. Embodiments described herein facilitate automation of the registration process. Specifically, there is no need for an administrator to intervene in order to set up a distribution list for a new project or to allow a new user to be registered. Access may be provided to new users immediately without waiting for an administrator to approve the request.

Steps 370 to 450 are message processing steps, and can be repeated to process multiple messages received by the at least one intermediate computing device 290. The processing of messages by the at least one intermediate computing device 290 allows for greater control of messages communicated to other users. In particular, it minimizes the possibility that particularly sensitive information associated with a given project may be distributed to individuals that are not authorized to receive it. Specifically, this is achieved by preventing recipients that are not associated with the project as well as other unauthorized parties from receiving messages associated with the project, to potentially gain unauthorized access to confidential project information.

In one embodiment, additional security may be provided by encrypting the contents of each message that is associated with a project by using a separate, project-specific encryption key. This encryption may be implemented by security module 298 of the intermediate computing device 290, for example. This project-specific encryption key may only be applied to messages that are determined to be associated with that specific project, as will be discussed in greater detail below.

At step 370, a message that is sent by a user of a mobile device ("sender") is received by the at least one intermediate computing device 290. The message comprises a user address associated with the sender's mobile device.

At step 380, it is determined, by project verification module 294 of the intermediate computing device 290 for example, if the message received at step 370 is associated with a project for which a distribution list has been initialized. In one embodiment, this is achieved by checking if the appropriate category indicator for the project has been associated with the received message. As mentioned above, the category indicator indicates that the user has identified the message as being associated with a particular project. In another embodiment, the project verification module 294 of the at least one intermediate computing device 290 determines whether a message is associated with a given project by parsing the message contents to search for one or more keywords that may have been defined as being associated with the project (e.g. at step 310). The contents of the message that are parsed may include such things as the subject line and/or the text of an e-mail message. In some embodiments, the project verification module 294 of the at least one intermediate computing device 290 may also examine the contents of attachments for keywords associated with the project. In some embodiments, it may be necessary to use project-specific encryption keys or other encryption keys to decrypt the contents of a message before the contents of the message can be parsed to determine the project.

It should be understood that the project verification module 294 of the at least one intermediate computing device 290 may employ various methods of determining whether a message is associated with a particular project. The methods described above are exemplary only and are not intended to be limiting. In addition, the above-described methods are not mutually exclusive. For example, in one embodiment, the category indicator may be used as the primary method of determining whether the message is associated with a particular project. A search of the contents of the message for keywords may also be used to ensure that any messages for which the sender has not assigned a category, but that are nonetheless clearly associated with a project, are sent to only the people included on the distribution list.

If it is determined that the message received at step 370 is not associated with the project defined at step 310, then the message will continue to be processed in known manner at step 390. Otherwise, the flow of method steps proceeds to step 400.

At step 400, project verification module 294 of the at least one intermediate computing device 290 determines whether the sender is permitted to send the message as a registered project participant, by checking if the address of the sender has been assigned to the distribution list.

If it is determined that the address of the sender has not been assigned to the distribution list, then step 410 is executed and the at least one intermediate computing device 290 may discard the message so that it is not sent to anyone. In one embodiment, an error message may be returned to the sender.

In a variant embodiment, non-registered parties may be permitted to send messages to users for which addresses have been assigned to the distribution list, even though the addresses of those non-registered parties sending the message have not been assigned to the distribution list. In that case, step 400 is not performed and verification that the address of the sender has been assigned to the distribution list need not be performed.

If, at step 400, it is determined that the message originated from a registered project participant then the flow of method steps proceeds to step 420.

At step 420, the project verification module 294 of the at least one intermediate computing device 290 determines whether the address of a given recipient of the message (e.g. the user address associated with the recipient's mobile device) has been assigned to the distribution list. If that specific recipient is not registered and that recipient's address has therefore not been assigned to the distribution list, then at step 430, the at least one intermediate computing device 290 does not send the message to that recipient. In some embodiments the sender may be given the option to override this requirement, and allow the message to be sent to one or more non-registered users.

On the other hand, if it is determined that the address of a given recipient has been assigned to the distribution list, then optionally, step 440 may be executed. At step 440, the message is encrypted with a project-specific encryption key. In some embodiments, the project-specific encryption key could be used in association with multiple, potentially related projects. The optional use of a different encryption key for each project enables a certain degree of segregation between the processing of project-specific messages and other messages that are not related to the project. It may be desirable to enforce that all incoming messages are encrypted with the project-specific encryption key.

In a variant embodiment, a security module or other module may be configured to contact a certificate authority server to obtain the public encryption key for each of the intended recipients of the message. The message may be encrypted using a symmetric key, and then the symmetric key may be encrypted for each recipient using the recipient's public key.

After step 440 has been completed, the message is sent to the particular recipient at step 450.

Steps 420 to 450 may be repeated for each recipient where there are multiple recipients identified in the message. In the above-described embodiments, the messages are only sent to recipients that are registered and whose addresses have been assigned to the distribution list. An error message may be sent to the sender to indicate that there were non-registered parties that were listed as recipients.

In a variant embodiment, where at least one recipient is a non-registered user, the at least one intermediate computing device 290 may prevent the message from being sent to any of the intended message recipients. An appropriate error message may be sent to the sender. In another variant embodiment, the sender may be given the option to override the requirement that a message not be sent to one or more non-registered users on a per message basis. This may be achieved, for example, by offering a "send anyways" option to the sender in response to an error message received by the sender, and the message may be processed by the at least one intermediate computing device accordingly.

The configuration of the system determines how the message is to be handled if some of the intended recipients are non-registered users, and such configuration may be set or modified by an administrator, for example.

It will be understood that with respect to step 440, the encryption and subsequent decryption may occur at various locations depending on the specific implementation. For example, in one embodiment in which each mobile device has access to a project-specific encryption key, the security module 298 of the at least one intermediate computing device 290 may be configured to encrypt the message while each recipient's mobile device may decrypt the message.

In an embodiment that provides for greater security, the project-specific encryption and decryption may be handled solely by the security module 298 of the at least one intermediate computing device 290. Where the sender's mobile device and all of the recipient's mobile devices are connected to a single intermediate computing device 290 (see e.g. FIG. 6A), it may not be necessary for the intermediate computing device 290 to further encrypt and decrypt the message, particularly if the connections between the intermediate computing device 290 and the mobile devices have already been secured. However, where there are multiple intermediate computing devices 290, and a different intermediate computing device 290 is coupled to the sender's device than to a given recipient's device (see e.g. intermediate computing devices 290a, 290b of FIG. 6B), the security module 298 of the intermediate computing device 290 coupled to the sender's device may encrypt the message using the project-specific encryption key, and the security module 298 of the intermediate computing device 290 coupled to the given recipient's device may decrypt the message using a corresponding decryption key. Where the two intermediate computing devices 290 are coupled via a public network, the further encryption can provide additional security. Furthermore, since only the intermediate computing devices 290 have access to the encryption keys, and the encryption keys are not made available to the individual mobile devices, the risk that the encryption keys may be discovered by unauthorized parties is minimized.

Where there are multiple intermediate computing devices 290 cooperating to implement an embodiment described herein, certain steps may be performed on one intermediate computing device 290, while other steps may be performed at another intermediate computing device 290. For example, steps 400 and 410 may be performed at an intermediate computing device (e.g. one of 290a and 290b of FIG. 6B) coupled to the sender's mobile device (e.g. 100a of FIG. 6B), while steps 420 and 430 may be performed at an intermediate computing device (e.g. the other of 290a and 290b of FIG. 6B) coupled to a given recipient's mobile device (e.g. 100b of FIG. 6B). In that case, step 440 may be performed prior to step 420 to ensure that the message is secured during transport between the two intermediate computing devices (e.g. 290a, 290b of FIG. 6B).

In a variant embodiment, some steps may be repeated at more than one intermediate computing device 290. For example, steps 400 to 430 may be performed both at an intermediate computing device (e.g. one of 290a and 290b of FIG. 6B) coupled to the sender's mobile device (e.g. 100a of FIG. 6B), and also at an intermediate computing device (e.g. the other of 290a and 290b of FIG. 6B) coupled to a given recipient's mobile device (e.g. 100b of FIG. 6B). This "double-check" may be desirable in certain circumstances. For instance, the intermediate computing device coupled to the recipient's mobile device may try to confirm that the distribution list of registered users has not been modified since the message was first checked by the intermediate computing device coupled to the sender's mobile device. As a further example, where a central or coordinated distribution list is not utilized by multiple intermediate computing devices (e.g. if a user must register with multiple intermediate computing devices), different intermediate computing devices may perform independent verifications.

It will be understood that registration steps may be repeated after a message is processed (flow of method steps not explicitly shown in FIG 7). In some implementations, the registration module 296 of the at least one intermediate computing device 290 may be able to process multiple registration requests and/or messages concurrently.

In a variant embodiment, a subset of one or more intermediate computing devices 290 may perform the steps associated with registration of users, while a different subset of one or more intermediate computing devices 290 may perform the steps associated with message processing.

In a variant embodiment, a certificate authority server coupled to the intermediate computing device 290 may maintain the distribution list. When a user registers for a project, the intermediate computing device 290 requests a certificate for that user from the certificate authority server, where the project is encoded in or otherwise associated with the certificate (e.g. the name of the certificate identifies the association {user, project}). Then during the encryption step, where performed, the intermediate computing device either uses a cached certificate or requests a certificate identifying the association {user, project} from the certificate authority server, and encrypts the message using the encryption key contained in that certificate. This may provide better security compared to the use of a single project-specific encryption key, because if one user's key is compromised, the whole project is not compromised. It may also allow easier revocation or removal of users from a project.

The steps of the methods described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of facilitating secure communication of messages associated with a project between a first computing device (100, 100a, 100b) and at least a second computing device (100, 100a, 100b), wherein the method is performed at one or more intermediate third computing devices (272, 290a, 290a, 290b), the method comprising:
performing at least one user registration (330, 340, 350, 360), each of the at least one user registration being performed upon receiving (320) a registration request, wherein the project is identified in the registration request;
receiving (370) a message comprising a first user address associated with one of the first and second computing devices (100, 100a, 100b), wherein the message further comprises a second user address associated with one other of the first and second computing devices (100, 100a, 100b);
determining (380) if the message is associated with the project; and transmitting (450) the message to the other of the first and second computing devices if the message is determined to be associated with the project and if both the first user address associated with the one of the first and second computing devices (100, 100a, 100b) and the second user address associated with the other of the first and second computing devices (100, 100a, 100b) are assigned to a distribution list, the distribution list being associated with the project and managed by the one or more intermediate third computing devices (272, 290a, 290a, 290b).

2. The method of claim 1, wherein the first computing device (100, 100a, 100b) comprises a first mobile device.

3. The method of claim 2, wherein the second computing device (100, 100a, 100b) comprises a second mobile device.

4. The method of any one of the preceding claims, wherein the act of performing (330, 340, 350, 360) at least one user registration comprises:
verifying (330) at least one registration request; and
for each of the at least one registration request, assigning (360) a user address to the distribution list upon successful verification of the respective registration request.

5. The method of claim 4, further comprising receiving (320) at least one registration request.

6. The method of any one of the preceding claims, further comprising encrypting (440) the message prior to transmitting (450) the message to the second user address if the message is determined to be associated with the project.

7. The method of claim 6, wherein the message associated with the project is encrypted with an encryption key, wherein the encryption key is associated with the project or is for encrypting to the second user address associated with the other of the first and second computing devices.

8. The method of claim 7, wherein the encryption key is controlled by the one or more intermediate third computing devices (272, 290a, 290a, 290b).

9. The method of claim 4 or any one of claims 5 to 8 when dependent on claim 4, wherein a registration code is associated with the project; and wherein for each of the at least one registration request, the respective registration request is successfully verified if the registration request comprises the registration code associated with the project.

10. The method of any one of the preceding claims, further comprising determining if the message comprises an indication that a category identifying the project is assigned to the message; wherein the message is determined to be associated with the project if the message comprises the indication.

11. The method of claim 10, wherein the indication is generated after a selection of a category in a menu is made in a user interface.

12. The method of any one of the preceding claims, further comprising performing a search of content in the message for one or more keywords associated with the project, wherein the message is determined to be associated with the project if the one or more keywords are located in the search.

13. The method of any one of the preceding claims, further comprising removing at least one of the first user address or the second user address from the distribution list.

14. The method of any one of the preceding claims, further comprising:
receiving a project creation request; and
initializing the distribution list upon receiving the project creation request.

15. The method of any one of the preceding claims, wherein the message comprises a reply to a prior message, and wherein said determining if the message is associated with the project comprises determining if the prior message is associated with the project.

16. The method of any one of the preceding claims, wherein the message comprises a forwarded message, and wherein said determining if the message is associated with the project comprises determining if the forwarded message is associated with the project.

17. The method of any one of the preceding claims, wherein the message is received in encrypted form, and wherein said determining if the message is associated with the project comprises determining if the message is encrypted with a project-specific encryption key associated with the project.

18. The method of any one of the preceding claims, wherein the distribution list is maintained at a certificate authority server coupled to the one or more intermediate third computing devices.

19. A system for facilitating secure communication of messages associated with a project between a first computing device (100, 100a, 100b) and at least a second computing device (100, 100a, 100b), the system comprising:
the first and second computing devices (100, 100a, 100b); and
one or more intermediate third computing devices (272, 290a, 290a, 290b) coupled to the first and second computing devices (100, 100a, 100b);
wherein in operation, messages communicated between the first and
second computing devices (100, 100a, 100b) are routable through the one or more intermediate third computing devices; and
wherein the one or more intermediate third computing devices are configured to perform the steps of the method as claimed in any one of the preceding claims.

20. An intermediate computing device (272, 290a, 290a, 290b) for securely transmitting messages associated with a project between a first computing device (100, 100a, 100b) and at least a second computing device (100, 100a, 100b), wherein messages communicated between the first and second computing devices (100, 100a, 100b) are routable through the intermediate computing device (272, 290a, 290a, 290b), wherein the intermediate computing device (272, 290a, 290a, 290b) is configured to perform the steps of the method as claimed in any one of claims 1 to 18.

21. A computer-readable medium for facilitating secure communication of messages associated with a project between a first mobile device (100, 100a, 100b) and at least a second mobile device (100, 100a, 100b) comprising instructions executable on a processor of one or more intermediate third computing devices (272, 290a, 290a, 290b), which when executed, causes the processor to perform the steps of the method as claimed in any one of claims 1 to 18.
